# EUROPÄISCHE PATENTANMELDUNG

(11) **EP 4 403 304 A1**
(43) Veröffentlichungstag der Anmeldung: **24.07.2024**
(21) Anmeldenummer: 23152604.7
(22) Anmeldetag: 20.01.2023
(51) Int. Cl.: B24B 13/005, B24B 49/12, B24B 9/14, G02B 27/00

(54) **LINSENHALTER, SCHUTZFILMENTFERNUNGSVORRICHTUNG UND VERFAHREN ZUM LÖSEN EINES SCHUTZFILMS VON EINER OPTISCHEN LINSE**

(71) Anmelder: OptoTech AG, 4528 Zuchwil (CH)
(72) Erfinder: Bucher, Andreas, 4524 Günsperg (CH); Engelmann, Olga, 3072 Ostermundigen (CH); Meier, Daniel, 4922 Bützberg (CH); Volken, Claude, 4710 Balsthal (CH); Schmidt, Dietmar, 45731 Waltrop (DE)
(74) Vertreter: Patentanwälte Olbricht Buchhold Keulertz

(57) **Zusammenfassung**

Die Erfindung betrifft einen Linsenhalter (1) zur Aufnahme einer optischen Linse (100), mit einem Trägerelement (2), das einen Aufnahmebereich (3) für die optische Linse (100) ausbildet, und mit einer Dichtstruktur oder Dichtung (4) am Trägerelement (2) zur Fixierung der optischen Linse (100) in dem Aufnahmebereich (3) durch Unterdruck, wobei eine Kamera (10) hinter dem Aufnahmebereich (3) angeordnet ist, mit deren Bildbereich (11) eine Lichtverteilung im Aufnahmebereich (3) erfasst wird. Außerdem betrifft die Erfindung eine Schutzfilmentfernungsvorrichtung (30) mit einem solchen Linsenhalter (1), wobei ein Einwirkmittel (31) dazu ausgestaltet ist mechanisch, thermisch, chemisch, pneumatisch oder hydraulisch auf einen Schutzfilm (110) auf einer optischen Linse (100) einzuwirken, wobei eine Auswerteeinrichtung (20) mit der Kamera (10) verknüpft und dazu ausgestaltet ist, die Lichtverteilung im Aufnahmebereich (3) auszuwerten, die insbesondere vom Fortschritt des Ablösens des Schutzfilms abhängig ist. Außerdem betrifft die Erfindung noch ein Verfahren und eine Verwendung des Linsenhalters (1), jeweils zum Lösen eines Schutzfilms (110) von einer optischen Linse (100).

## Beschreibung

Die Erfindung betrifft einen Linsenhalter gemäß dem Oberbegriff von Anspruch 1, eine Schutzfilmentfernungsvorrichtung zum Lösen eines Schutzfilms von einer optischen Linse mit einem solchen Linsenhalter nach Anspruch 6, ein Verfahren zum Lösen eines Schutzfilms von einer optischen Linse gemäß Anspruch 13 sowie eine Verwendung des Linsenhalters nach Anspruch 15.

Aus optischen Linsenrohlingen werden beispielsweise Brillengläser hergestellt. Obwohl hierbei individuelle optische Flächen hergestellt werden müssen, um Sehfehler von Personen zu korrigieren, gleicht die Fertigung einer Massenproduktion. Nur so lassen sich die Brillengläser kostengünstig herstellen. Weil die Herstellung von Optiken klassischer Weise ein Handwerk ist und immer noch eine hohe Flexibilität notwendig ist, um die notwendigen optischen Flächen herzustellen, existieren im Stand der Technik zahlreiche Maschinen, um einzelne Arbeitsschritte automatisiert auszuführen, so zum Beispiel Fräsmaschinen, Drehmaschinen, Poliermaschinen und Beschichtungsmaschinen. Zwischen diesen automatisierten Arbeitsschritten werden jedoch weiterhin manuelle Arbeitsschritte ausgeführt.

Einer dieser Arbeitsschritte betrifft das Abziehen von Schutzfolien, die auf einer zweiten Linsenoberfläche eines optischen Linsenrohlings aufgebracht werden, damit die erste Linsenoberfläche bearbeitet werden kann, ohne dass die zweite Linsenoberfläche hierbei beschädigt wird. Zum Abziehen der Schutzfolie nimmt ein Arbeiter bspw. ein spitzes Werkzeug, um die Abdeckfolie anzuheben und dann abzuziehen. Das ist jedoch zeitaufwändig und führt außerdem zu Kratzern auf der Oberfläche des Linsenrohlings. Hierdurch erhöht sich der Ausschuss.

Aus DE 10 2015 121 682 A1 ist bekannt, einen Schutzfilm dadurch von einer Linsenoberfläche zu lösen, dass man diesen Schutzfilm in einem Bereich greift, in dem er eine Ausnehmung in der Linsenoberfläche überspannt. Anschließend wird der Schutzfilm mechanisch abgezogen. Nachteilhaft hieran ist, dass die Ausnehmung vor dem Aufbringen des Schutzfilms ausgebildet sein muss. Damit man dort später überhaupt greifen kann.

Aus EP 2 042 265 B1 ist ein Verfahren zum Ablösen einer Schutzfolie von einer Linse bekannt, bei dem die Linse rotiert wird, während mit einer einzelnen Düse mit variabel geneigtem Fluidstrahl (entsprechend einer Dreckfräse eines Hochdruckreinigers) heißes Fluid vom Umfang her gegen die Linse gespritzt wird. Durch den kegeligen und sich hinsichtlich des Winkels ändernden heißen Druckstrahl wird die Schutzfolie erwärmt und der Klebstoff der Schutzfolie weich. Schließlich schmilzt der Klebstoff der Schutzfolie soweit, dass sich die Schutzfolie vom Druckstrahl unterstützt an ihrem Umfang löst. Anschließend löst sich die Schutzfolie sukzessive durch Unterstützung des Drucks des Fluidstrahls weiter ab. Nachteilhaft ist hierbei, dass der Arbeitsprozess so lang ausgelegt werden muss, dass er mit sehr hoher Wahrscheinlichkeit alle Schutzfilme entfernt. In allen anderen Fällen mit weniger hartnäckigen Schutzfilmen umfasst die Entfernungen einen überschüssigen Arbeits- und Ressourcenaufwand. Ein weiterer Nachteil ist der Verbleib von geschmolzenem Klebstoff auf der Linsenoberfläche, der im Nachgang entfernt werden muss. Außerdem wird sehr viel heißes Fluid benötigt, dass aufgrund seines kegeligen Versprühens eine große Oberfläche zur Umgebung aufweist. Es geht daher viel Wärmeenergie an die Umgebung verloren, die entsprechend neu zugeführt werden muss. Außerdem entsteht eine große Menge hochfeuchter Luft, die in die Werkshallen austritt.

In EP 4 101 586 A1 ist eine Schutzfilmentfernungsvorrichtung beschrieben, bei der mit einer Fluiddüse ein gerader Fluidstrahl um den Linsenumfang herumbewegt wird und wellenartige Bewegungen über die Trennstelle zwischen zweiter Linsenoberfläche und Schutzfilm durchgeführt werden. Auch hierbei steht man vor dem Problem, dass der Ablöseprozess am schlechtest möglichen Fall ausgelegt werden muss, woraus lange Prozesszeiten für alle optischen Linsen resultieren. Je präziser die Düsenbewegungen zudem ausgelegt werden, desto eher kann man entlang des Düsenpfads den Zugriff auf die Trennstelle verlieren und die Fortsetzung der Düsenbewegung erzielt ab diesem Fehlerpunkt keinen weiteren Fortschritt mehr. Dann muss man den Arbeitsprozess von vorne starten und den Pfad mit der Fluiddüse komplett neu abfahren. Auf EP 4 101 586 A1 wird hiermit vollumfänglich Bezug genommen, deren Inhalt hiermit in diese Anmeldung aufgenommen wird, wobei insbesondere sämtliche optionalen Merkmale der EP 4 101 586 A1 auch optionaler Gegenstand der vorliegenden Erfindung sein können.

Aufgabe der Erfindung ist es, eine Lösung bereitzustellen, mit der sich ein Schutzfilm effizient, effektiv und möglichst ohne Kleberückstände von einer Linsenoberfläche entfernen lässt. Es soll ein hoher Automatisierungsgrad erzielt werden und die Lösung soll dabei einfach ausführbar und kostengünstig sein.

Hauptmerkmale der Erfindung sind im kennzeichnenden Teil von Anspruch 1, sowie den Ansprüchen 6, 13 und 15 angegeben. Ausgestaltungen sind Gegenstand der Ansprüche 2 bis 5, 7 bis 12 und 14.

Die Erfindung betrifft einen Linsenhalter zur Aufnahme einer optischen Linse, insbesondere einer optischen Linse mit einer ersten Linsenoberfläche, einer der ersten Linsenoberfläche gegenüberliegenden zweiten Linsenoberfläche und einem Linsenumfang, mit einem Trägerelement, das einen Aufnahmebereich für die optische Linse ausbildet, und mit einer Dichtstruktur oder Dichtung am Trägerelement zur Fixierung der optischen Linse in dem Aufnahmebereich durch Unterdruck. Dabei ist vorgesehen, dass eine Kamera hinter dem Aufnahmebereich angeordnet ist, mit deren Bildbereich eine Lichtverteilung im Aufnahmebereich erfasst wird.

Durch diese Kamera wird ermöglicht, einen Entfernungsvorgang des Schutzfilms von der Rückseite der optischen Linse zu beobachten und auszuwerten. Es lässt sich insbesondere überprüfen, ob der Schutzfilm (bspw. eine Folie, Tape oder auch ein aufgesprühter Film) erfolgreich entfernt wurde. Ausschuss und Nacharbeit werden reduziert und es kommt zu keinen Störungen von bspw. Saughaltern beim Entladen der optischen Linsen aus dem Linsenhalter. Es lässt sich zudem während des Entfernungsvorgangs der Zeitpunkt des Entfernens ermitteln und der Vorgang unmittelbar individuell zu beenden. Das erhöht den Durchsatz, reduziert den Ressourceneinsatz und verlängert Wartungsintervalle. Es wird auch ermöglicht, gezielt auf lokale Schutzfilmreste einzuwirken, weil deren Position bestimmt werden kann. Die optische Linse hat in den allermeisten Fällen eine optische Wirkung und deswegen wird nur in sehr seltenen Fällen ein scharfes Bild vorliegen. Konturen spielen bei der Auswertung daher eher eine untergeordnete Rolle. Der Fokus der Auswertung liegt in der Lichtverteilung, bspw. auch inklusive der Lichtfarbe, welche durch die Verschattung mit dem Schutzfilm beeinflusst ist. Die Verschattung ändert sich mit dem Fortschritt der Schutzfilmentfernung. Das Halten durch Unterdruck ist besonders schonend zu ggf. bereits optisch wirksamen Oberflächen.

Bei der optischen Linse sind die erste und zweite Linsenoberfläche typischerweise durch den Linsenumfang begrenzt. Außerdem weist sie eine (imaginäre) optische Achse auf, um die herum der Linsenumfang verläuft. Zu den optischen Linsen zählen auch unbearbeitete und teilbearbeitete Linsenrohlinge sowie die einzelnen Fertigungsstadien von Brillengläsern aus einem Linsenrohling.

Der Linsenhalter sollte eine imaginäre Mittelachse aufweisen, die insbesondere bei aufgenommener optischer Linse quer zur ersten und zweiten Linsenoberfläche ausgerichtet ist und vorzugsweise zumindest im Wesentlichen mit der Linsenachse zusammenfällt.

Gemäß einer näheren Ausgestaltung des Linsenhalters ist die Dichtung ein Dichtring und die Kamera ist zurückversetzt im Zentrum des Dichtrings angeordnet. Damit liegt die Kamera geschützt im Zentrum des Dichtrings. Bspw. Sprühwasser und Nebel können hier nicht hingelangen, sodass die Auswertung der Lichtverteilung auch während solche Störfaktoren außerhalb der Dichtung vorhanden sind, erfolgen kann.

Bei einer speziellen Weiterbildung ist die Kamera fluiddicht in einem Gehäuse des Linsenhalters angeordnet. Damit ist die Kamera vor Feuchteschäden geschützt und der Linsenhalter kann bspw. als Plug- and Play-Baueinheit eingesetzt und ausgetauscht werden.

In einer bevorzugten Ausführungsform sitzt zwischen der Kamera und dem Aufnahmebereich eine optisch durchlässige Scheibe im Gehäuse. Das erlaubt, eine als solche nicht fluiddichte Kamera einzusetzen und hilft deren Bildbereich durch den Abstand zum Aufnahmebereich festzulegen. So lässt sich ein möglichst großer Bereich der zweiten Linsenfläche mit der Kamera erfassen, ohne dass spezielle Kameraoptiken eingesetzt werden müssten.

Optional ist zwischen der Kamera und dem Aufnahmebereich ein Hohlraum ausgebildet, in den ein Unterdruckkanal mündet. Der Hohlraum hält den optischen Weg für die Kamera frei und ermöglicht, einen Unterdruck zum Saughaltern der optischen Linse hinter der ersten Linsenfläche zu erzeugen. So befindet sich insbesondere im Zentrum des Dichtrings möglichst kein Bauelement aus nicht optisch durchlässigem Material. Dabei kann im Speziellen der Unterdruckkanal mit einer Unterdruckpumpe verbunden sein. Damit gelingt ein schnelles und automatisiertes Festsaugen der optischen Linse an dem Linsenhalter. Alternativ könnte im Unterdruckkanal auch ein öffenbares Rückschlagventil angeordnet sein, sodass die Linse durch Andrücken an den Dichtring fixierbar ist (ähnlich einem Saugnapf), und sich nach Öffnen des Rückschlagventils wieder löst. Insbesondere sollte die Dichtung mit der ersten Linsenfläche in Kontakt stehen. Der Unterdruckkanal sollte an einem geodätisch tiefliegenden Punkt, idealer Weise am tiefstliegenden Punkt, in den Hohlraum münden, dies insbesondere, wenn der Hohlraum geodätisch unterhalb des Aufnahmebereichs liegt. Damit lässt sich etwaige Feuchtigkeit und Schmutz beim Erzeugen des Unterdrucks mit aus dem Hohlraum evakuieren, sodass diese keine Störfaktoren im Bildbereich der Kamera bilden.

Die Erfindung betrifft außerdem eine Schutzfilmentfernungsvorrichtung mit einem Linsenhalter wie er vor- und nachstehend angegeben ist. Dabei ist der Linsenhalter dazu ausgebildet, eine optische Linse mit einer ersten Linsenoberfläche, einer der ersten Linsenoberfläche gegenüberliegenden zweiten Linsenoberfläche und einem Linsenumfang, wobei die optische Linse mit der ersten Linsenoberfläche in Richtung des Linsenhalters weist und auf der zweiten Linsenoberfläche ein Schutzfilm aufgebracht ist, in einer Entfernungsstation zum Lösen des Schutzfilms von der zweiten Linsenoberfläche der optischen Linse zu halten. Dabei weist die Entfernungsstation ein Einwirkmittel auf, das dazu ausgestaltet ist mechanisch (bspw. durch Greifen, Ziehen oder Spachteln), thermisch (bspw. mit Infrarotstrahlung, Heißluft, oder warmes Fluid), chemisch (bspw. mit einem Lösemittel zum Auflösen des Schutzfilms oder dessen Klebstoff), pneumatisch (bspw. mit Druckluft) oder hydraulisch (bspw. mit einem Fluidstrahl) auf den Schutzfilm einzuwirken, insbesondere, um diesen von der zweiten Linsenoberfläche zu entfernen. Die Entfernungsstation weist eine Auswerteeinrichtung auf, die mit der Kamera verknüpft und dazu ausgestaltet ist, die Lichtverteilung im Aufnahmebereich auszuwerten.

Die Lichtverteilung ermöglicht Aufschluss darüber, wo und wann der Schutzfilm erfolgreich entfernt ist, dies insbesondere vor, nach und während des Einwirkens auf den Schutzfilm. Die Dauer, Intensität und Lokalität des Einwirkens lassen sich auf das notwendige Maß reduzieren.

In der Auswerteeinrichtung sind vorzugsweise Lichtparameter hinterlegt, die zwischen einem Vorhandensein oder Nicht-Vorhandensein eines Schutzfilms auf der zweiten Linsenoberfläche im Bereich eines Bildausschnitts des Bildbereichs differenzieren. Das ermöglicht einen Abgleich von Ist-Parametern mit erwarteten Lichtparametern.

Weiter vorzugsweise ist die Auswerteeinrichtung dazu ausgestaltet, als Eingangsparameter die Lichtverteilung vor dem Einwirken heranzuziehen und die darauffolgende Veränderung der Lichtverteilung auszuwerten. Mit diesen Ist-Parametern lässt sich die individuelle Situation mit der gerade bearbeiteten optischen Linse beurteilen und mit erwarteten Lichtparametern abgleichen.

Es besteht die Option sukzessive neue Datensätze zu den Lichtparametern bei der Bearbeitung der einzelnen optischen Linsen zu generieren und in der Auswerteeinrichtung als Vergleichswerte abzulegen.

Optional ist es auch möglich, dass die Auswerteeinrichtung dazu ausgestaltet ist, als Eingangsparameter die optische Wirkung der im Linsenhalter befindlichen optischen Linse und/oder die Art des Schutzfilms zu berücksichtigen. Damit lässt sich beispielsweise die Auswertung anhand vergleichbarer Datensätze mit Lichtparametern vollziehen. Bei einer dünnen optischen Linse mit kleiner Krümmung dringt bspw. sehr wenig Randlicht über den Linsenumfang der optischen Linse ins Zentrum. Bei dicken Linsen kann der Randbereich derart hell erscheinen, dass man kaum eine Schutzfolie in diesem Bereich vermuten würde. Kenntnisse über die Art des Schutzfilms geben Auskunft darüber, ob eine Vollverschattung zu erwarten ist, oder bspw. eine Teiltransparenz vorliegt. Bei bspw. grüner oder blauer Farbe der Schutzfolie können bei Teiltransparenz Lichtwellenlängen beim Durchdringen der Schutzfolie oder beim Reflektieren an Folienkanten beeinflusst sein, die auswertbar sind.

Gemäß einer näheren Ausgestaltung der Schutzfilmentfernungsvorrichtung weist diese ein Leuchtmittel auf, das den Aufnahmebereich des Linsenhalters beleuchtet. Damit kann eine besser definierte Auswertungsumgebung bereitgestellt werden. Dazu sollte das Leuchtmittel vorzugsweise in Richtung der Kamera leuchten, sodass insbesondere die optische Linse zwischen dem Leuchtmittel und der Kamera positioniert ist. In einer ergänzenden oder alternativen Ausgestaltung weist der Linsenhalter ein internes Leuchtmittel hinter dem Aufnahmebereich auf, sodass der Zwischenraum zwischen Aufnahmebereich und Kamera beleuchtet ist. Selbst wenn die Umgebung aufgrund des Einwirkens auf den Schutzfilm nahezu vollständig abdunkelt, kann so von der Rückseite der optischen Linse aus noch auf Farbunterschiede/Lichtwellenlängen in der Verschattung durch den Schutzfilm und die Verschattung durch bspw. Sprühnebel geschlossen werden. Es besteht die Option, die Leuchtmittel einzeln, bspw. im Wechsel zu aktivieren und Einzelauswertungen zu machen. Eine weitere Option besteht darin, die Leuchtmittel mit definierten Lichtwellenlängen zu aktivieren und Einzelauswertungen nach der jeweils eingesetzten Lichtwellenlänge durchzuführen. Dabei sind auch für das menschliche Auge nicht sichtbare Wellenlängen einsetzbar.

Bei einer speziellen Ausführungsform ist das Leuchtmittel kinematisch mit einem Verschlusselement eines Maschinengehäuses gekoppelt, und nimmt insbesondere in einer Geschlossenstellung des Verschlusselements eine Arbeitsposition ein, in der es den Aufnahmebereich des Linsenhalters beleuchtet, und in einer Offenstellung des Verschlusselements ist das Leuchtmittel aus der Arbeitsposition heraus bewegt. Damit kann das Einwirken auf den Schutzfilm geschützt im Maschinengehäuse erfolgen, und zum Be- und Entladen des Linsenhalters mit optischen Linsen lässt sich das Verschlusselement öffnen. Vorteilhafterweise wird dabei direkt das Leuchtmittel beiseite bewegt, um den Zugriff zum Aufnahmebereich des Linsenhalters freizugeben. So kann das Leuchtmittel seine Arbeitsposition bspw. direkt zentral in der Mittelachse des Linsenhalters haben.

Weiterhin kann optional eine Außenkamera außerhalb des Linsenhalters angeordnet sein, die mit ihrem Bildbereich die zweite Linsenoberfläche aus der von der Kamera gegenüberliegenden Richtung erfasst. Die bereits vorstehend eingeführte Kamera hat den Vorteil freier Sicht auch während des Einwirkens auf den Schutzfilm, z.B. bei Sprühwasser und Nebel. Aufgrund der optischen Wirkung der optischen Linse und der daraus resultierenden Bildunschärfe ist jedoch kaum eine Objekterkennung zu leisten, sondern es muss mit der Lichtverteilung aufgrund von Verschattungsfeldern durch den Schutzfilm gearbeitet werden. Der Vorteil der Außenkamera ist, dass diese ohne Sichtfeldeinschränkungen durch den Linsenhalter freie Sicht hat und keine optische Wirkung der optischen Linse die Bildschärfe beeinträchtigt. Außerdem können mit der Außenkamera zumindest vor und nach dem Einwirken auf den Schutzfilm Bildparameter wie Farben und Lichtbrechungskanten ausgewertet werden können. Es wird eine zusätzliche Kontrolle ermöglicht, um sicherzustellen, dass der Schutzfilm vollständig entfernt ist, bspw. bei einem Halten der optischen Linse mit einem Dichtungsring auch am äußeren Umfang der optischen Linse, der durch den Dichtungsring für die Kamera verdeckt sein kann.

Die Auswerteeinrichtung kann mit der Außenkamera verknüpft und dazu ausgestaltet sein, eine Objekterkennung im Aufnahmebereich durchzuführen, insbesondere durch Auswerten von Indikatoren für einen Schutzfilm oder Schutzfilmreste auf der zweiten Linsenoberfläche. Dabei können in der Auswerteeinrichtung Bildparameter hinterlegt sein, die zwischen einem Vorhandensein oder Nicht-Vorhandensein eines Schutzfilms auf der zweiten Linsenoberfläche im Bereich eines Bildausschnitts der Außenkamera differenzieren. Das können beispielsweise Farben des Schutzfilms und Lichtkanten von geknickten oder teilgelösten Schutzfilmen sein. Auch zu diesen Bildparametern können sukzessive neue Datensätze bei der Bearbeitung der einzelnen optischen Linsen generiert und in der Auswerteeinrichtung als Vergleichswerte abgelegt werden.

Ein weiterer Eingangsparameter der Auswerteeinrichtung bei der Auswertung kann die konkrete Geometrie der optischen Linse sein. Die Kenntnis der Position von z.B. der Kante zwischen Linsenumfang und zweiter Linsenoberfläche erleichtert den Abgleich mit anderen Datensätzen.

Im Speziellen kann der Linsenhalter eine imaginäre Mittelachse aufweisen, und die Einwirkmittel weisen wenigstens eine Fluiddüse mit einem Düsenaustrittskanal und wenigstens eine Drehlagerung zwischen dem Linsenhalter (einerseits) und der oder den Fluiddüsen (andererseits) auf, wobei die Drehlagerung derart ausgebildet ist, dass mit der oder den Fluiddüsen eine Relativbewegung um die Mittelachse ausführbar ist, wobei der Düsenaustrittskanal der Fluiddüsen jeweils nach innen (insbesondere bezogen auf die Drehlagerung) ausgerichtet ist. Gerade bei diesen Sprühverfahren sind recht variable Minimaleinwirkdauern erforderlich, um den Schutzfilm abzulösen, während gleichzeitig derart viel Sprühnebel entsteht, dass man von außen keinerlei Beobachtungen zum Arbeitsfortschritt anstellen kann. Mit der erfindungsgemäßen Kamera des Linsenhalters wird dem abgeholfen.

Gemäß einer Ausgestaltungsvariante ist zwischen dem Linsenhalter (einerseits) und der oder den Fluiddüsen (andererseits) eine Hubvorrichtung derart ausgebildet, dass mit der oder den Fluiddüsen eine Relativbewegung zum Linsenhalter ausführbar ist, die längs, vorzugsweise zumindest im Wesentlichen parallel und besonders bevorzugt parallel zur Mittelachse ausgerichtet ist. Der Vorteil der Hubvorrichtung liegt darin, dass der oder die Fluidstrahlen der Fluiddüsen einerseits um den Umfang herumgeführt, und zusätzlich hinsichtlich ihrer Höhenlage eingestellt werden können, dies bspw. kontinuierlich, langsam, schnell, oszillierend, ruckartig oder harmonisch. Der Fluidstrahl lässt sich so nicht nur um den Umfang herum auf den Linsenumfang richten, sondern gezielt auf die Höhenlagen einstellen, in denen der bestmögliche Lösungseffekt für den Schutzfilm erzielt wird. Dies wird insbesondere dem Umstand gerecht, dass sich der optionale Auftreffpunkt des Fluids mit dem sich sukzessive lösenden Schutzfilm verschiebt. Es gelingt mittels der Hubvorrichtung ein präzises, lokales Ablösen des Schutzfilms. Anstatt mit einem großvolumigen Fluidstrahl zu arbeiten, genügt es durch die Hubvorrichtung einen wesentlich feineren Fluidstrahl zu nutzen. Hierdurch werden Fluid und Energie eingespart. Durch Auswertung der Lichtverteilung können die Drehlagerung und/oder die Hubvorrichtung auch individuell anhand aktueller Daten angesteuert werden, um den Schutzfilm effizient zu lösen.

Optional kann die Hubvorrichtung einen Hubantrieb aufweisen. Damit ist die Hubbewegung individuell ausführbar. Bei dem Hubantrieb handelt es sich bevorzugt um einen pneumatischen Hubzylinder oder einen elektrischen Motor, beispielsweise einen elektrischen Linearmotor oder einen Spindelantrieb. Ein pneumatischer Hubzylinder agiert vergleichsweise schnell, während mit dem elektrischen Motor sehr präzise Stellbewegungen und Stellbewegungen mit definierten Beschleunigungen durchführbar sind. Damit lässt sich die Zielposition besonders präzise anvisieren. Außerdem können die optionalen oszillierenden Bewegungen mit besonders kleinen Stellwegen ausgeführt werden. Bevorzugt ist hierzu die Position der oberen Glaskante der optischen Linse bekannt, also die Glaskante zwischen zweiter Linsenoberfläche und Linsenumfang. Dadurch kann das optionale Oszillieren auf ein Minimum entlang der Glaskante gebracht werden und so ein Maximum an Effektivität des Fluidstrahls bzw. der Fluidstrahlen erreicht werden.

Eine preiswertere Alternative zum Hubantrieb wäre ein mechanisches Korrelationsgetriebe, beispielhaft ein Kurvengetriebe, dass die Hubbewegungen der Hubvorrichtung an die Drehbewegung der Drehlagerung koppelt.

Bevorzugt ist der Linsenhalter drehfest angeordnet, insbesondere drehfest relativ zu einem Maschinengestell, und die Fluiddüse oder die Fluiddüsen sind jeweils drehbar um die Drehlagerung angeordnet, insbesondere drehbar relativ zu einem bzw. dem Maschinengestell. Der Linsenhalter sollte insbesondere dazu ausgestaltet sein, die optische Linse drehfest und axialfest im Aufnahmebereich zu halten. Daraus resultiert gewissermaßen ein Düsenkarussell, mit dem die Fluiddüsen um den Linsenhalter gedreht werden. Es wird ein ruhiges Bild mit der Kamera erzeugt, und es ist nicht mit Änderungen der Lichtverteilung aufgrund von Rotieren der optischen Linse zu rechnen. Gerade bei Brillengläsern sind die Linsenoberflächen nämlich häufig nicht rotationssymmetrisch.

In einer anderen oder ergänzenden Erfindungsausprägung sind der oder die Düsenaustrittskanäle jeweils derart ausgebildet, dass sie einen zumindest im Wesentlichen geraden, insbesondere zylindrischen und insbesondere laminaren, Strahl aus Fluid erzeugen. Der Einsatz eines solchen Strahls erlaubt es wesentlich einfacher als bei turbulenten Strahlen wie bei einer Dreckfräse, das Lösen des Schutzfilms zu simulieren und hinsichtlich der eingesetzten Ressourcen Fluid und Energie zu optimieren. Anders als solch ein Strahl mit sich ändernder Neigung lässt sich der gerade Strahl fein auf die Trennlinie zwischen der optischen Linse und dem Schutzfilm ausrichten. Gleichzeitig kann ein unwirksames frontales Bestrahlen des Linsenumfangs reduziert werden. Bei Varianten mit mehr als einer Fluiddüse können optional die Fluidstrahlen der Fluiddüsen den gleichen oder einen abweichenden Durchmesser haben. Gleiche Durchmesser sind insbesondere dann besonders geeignet, wenn der Drehwinkel so ausgebildet ist, dass jede Fluiddüse für das Lösen des Schutzfilms in einem definierten Drehwinkelbereich zuständig ist. Bei größeren Drehwinkeln sind Vorteile mit unterschiedlichen Durchmessern der Fluidstrahlen erzielbar, denn dann bearbeiten mehrere Düsen den gleichen Winkelbereich der optischen Linse und unterschiedliche Durchmesser der Fluidstrahlen gehen mit unterschiedlichen Wirkkräften auf den Schutzfilm einher, die sich gegenseitig ergänzen können.

Gemäß einer weiteren optionalen Erfindungsausprägung sind der oder die Düsenaustrittskanäle jeweils über einen Zulauf, insbesondere einen gemeinsamen Zulauf, mit Fluid gespeist, wobei im Zulauf eine Förderpumpe, insbesondere eine gemeinsame Förderpumpe, und/oder eine Kühlvorrichtung, insbesondere eine gemeinsame Kühlvorrichtung, zum Kühlen des Fluids angeordnet ist. Das Nutzen einer gemeinsamen Förderpumpe ist kosteneffizient. Eine Kühlvorrichtung hat den Vorteil, dass auch bei ungünstigen Umgebungstemperaturen, zum Beispiel in nicht klimatisierten Werkhallen, ein ungewolltes Erwärmen des Fluids verhindert werden kann. Auf diese Weise lässt es sich außerdem verhindern, dass der Klebstoff des Schutzfilms schmilzt und Rückstände hiervon auf der Linsenoberfläche zurückbleiben. Das gekühlte Fluid trägt dazu bei, dass der Klebstoff an dem sich lösenden Schutzfilm haftet. Zum Zulauf soll optional auch der Abschnitt ab Austritt aus den Fluiddüsen gehören, dies insbesondere wenn eine Rückführung des Fluids zur erneuten Verwendung vorgesehen ist. Die Kühlvorrichtung kann als passiver Wärmetauscher ausgebildet sein. Um von Umgebungsparametern unabhängig zu sein, bietet sich als Alternative an, dass die Kühlvorrichtung ein Kühlaggregat oder eine Wärmepumpe aufweist. Die Abwärme des Fluids kann optional verwertet werden, bspw. durch ein Gebläse zum Trockenblasen der Linse nach dem Lösen des Schutzfilms.

In einer besonderen Ausführungsform ist im Zulauf ein Sammelbehälter angeordnet, in dem sich aus den Fluiddüsen ausgetretenes Fluid sammelt. Hierdurch lässt sich das Fluid wiederholt nutzen. Vorzugsweise wird ein Filter im Zulauf angeordnet. Damit können Schmutzpartikel wie Bearbeitungsrückstände, die der optischen Linse vor dem Lösen des Schutzfilms anhaften können, aus dem Fluid entfernt werden.

Im Speziellen können der oder die Düsenaustrittskanäle jeweils mit Ausnahme der Drehlagerung einen statischen Winkel aufweisen, insbesondere relativ zur Mittelachse. Damit kommt die Vorrichtung mit wenigen Antrieben aus, selbst wenn mehrere Fluiddüsen vorgesehen sind. Vorzugsweise weist der Düsenaustrittskanal oder weisen die Düsenaustrittskanäle leicht schräg von oben in Richtung des Linsenhalters und/oder dessen Aufnahmebereich. Weiterhin beträgt der Winkel zwischen einer Ausrichtungsebene, die senkrecht zur Mittelachse ausgerichtet ist und dem oder den Düsenaustrittskanälen bevorzugt zwischen -5 Grad und 50 Grad, weiter bevorzugt zwischen 0 Grad und 40 Grad und besonders bevorzugt zwischen 5 Grad und 35 Grad.

Gemäß einer optionalen Weiterbildung weist die Drehlagerung ein Drehlager und hieran einen Ausleger oder eine Scheibe auf, wobei die Fluiddüse oder die Fluiddüsen jeweils an dem Ausleger oder der Scheibe festgelegt sind. Hierdurch lässt sich ein kleines Drehlager im Zentrum einsetzen und die Fluiddüsen lassen sich dennoch vom Zentrum entfernt anordnen, bspw. auch in der Form eines Korbes oder Topfes, in deren Zentrum der Linsenhalter platziert werden kann.

Eine weitere ergänzende oder alternative Erfindungsausprägung kann darin bestehen, dass die Drehlagerung einen begrenzten Drehbereich aufweist, wobei der Drehbereich bevorzugt weniger als 360 Grad beträgt, und wobei vorzugsweise ein Drehantrieb mit Richtungswechsler vorgesehen ist, insbesondere um die Fluiddüsen und den Linsenhalter oder dessen optionale Aufnahmefläche mit Drehrichtungswechsel relativ zueinander hin- und herzuschwenken. Damit werden weniger große Belastungsanforderung an die Drehbarkeit gestellt, wozu insbesondere auch verschiedene Drehdurchführungen gehören, über die beispielsweise das Fluid zu den Fluiddüsen transportiert werden kann. Bei begrenzten Drehwinkeln kann statt Drehdurchführungen auch die Verwendung von bspw. flexiblen Schläuchen in Betracht kommen.

Bei einer besonderen Ausführungsform ist der Linsenhalter höhenlagefest angeordnet, insbesondere während des Lösens des Schutzfilms und insbesondere höhenlagefest relativ zu einem Maschinengestell, und die Fluiddüsen sind mit der Hubvorrichtung längs zur Mittelachse beweglich angetrieben, insbesondere beweglich relativ zu dem Maschinengestell. Damit sind die Werkzeuge, nämlich die Fluiddüsen, der höhenbewegliche Teil, der auf das Werkstück, nämlich die optische Linse, ausgerichtet werden kann. Optional kann die Lagerung jedoch auch umgekehrt ausgeführt werden.

Eine optionale Variante besteht darin, dass die Drehlagerung zwischen der Hubvorrichtung einerseits und der oder den Fluiddüsen andererseits angeordnet ist. Dann wird die Drehlagerung mit der Hubvorrichtung mitbewegt. Alternativ könnte die Anordnung auch umgekehrt sein, also die Hubvorrichtung zwischen der Drehlagerung einerseits und den Fluiddüsen andererseits angeordnet sein. Dann gehört die Hubvorrichtung zur sich drehenden Masse.

Optional weist die Schutzfilmentfernungsvorrichtung exakt zwei oder wenigstens zwei oder exakt drei oder wenigstens drei Fluiddüsen auf. Zwei, drei oder mehr Fluiddüsen tragen dazu bei, dass weniger relative Umdrehungen zwischen optischer Linse und den Fluiddüsen notwendig sind, um den Schutzfilm zu entfernen. Die Varianten mit exakt zwei oder exakt drei Fluiddüsen sind dabei aus Kostengründen die bevorzugten Anzahlen.

Gemäß einer weiteren ergänzenden oder alternativen Erfindungsausprägung weist die Schutzfilmentfernungsvorrichtung exakt zwei oder wenigstens zwei Fluiddüsen auf, wobei eine der zwei Fluiddüsen um einen definierten Drehwinkel um die Mittelachse versetzt zur anderen der zwei Fluiddüsen angeordnet ist. Damit wird die Geschwindigkeit des Ablösens des Schutzfilms erhöht. Der Drehwinkel kann beispielsweise zwischen 10 und 180 Grad liegen, liegt bevorzugt zwischen 20 und 90 Grad und besonders bevorzugt zwischen 30 und 60 Grad. Des Weiteren gelingt es mit Hilfe der zwei versetzt angeordneten Fluiddüsen auch bei einem Drehbereich der Drehlagerung von weniger als 360 Grad 360 Grad des Linsenumfangs abfahren zu können.

Optional können die zwei oder drei Fluiddüsen fest miteinander verbunden sein, sodass zwischen dem Linsenhalter einerseits und den zwei Fluiddüsen andererseits eine Drehlagerung derart ausgebildet ist, dass mit den zwei Fluiddüsen eine Relativbewegung um den Linsenhalter ausführbar ist, wobei die Düsenaustrittskanäle nach innen ausgerichtet sind. Entsprechend können sich die mehreren Fluiddüsen die Drehlagerung, Drehantriebe, Hubvorrichtungen, den Zulauf und ähnliches teilen. Entsprechend ist ein synchroner Betrieb der mehreren Fluiddüsen möglich. Dies hält die Konstruktion einfach und die Kosten gering. Im Besonderen können sich die Fluiddüsen den Zulauf zumindest teilweise oder komplett teilen, hierbei insbesondere zumindest teilweise oder ganz die Förderpumpe, den Sammelbehälter und/oder die Kühlvorrichtung. Optional sind die Fluiddüsen zumindest im Wesentlichen baugleich ausgebildet.

Vorzugsweise weist die Drehlagerung eine Drehachse auf, die koaxial zur Mittelachse des Linsenhalters ausgerichtet ist. Damit wird ein konstanter Abstand der Fluiddüsen zu kreisförmigen Linsenumfängen erreicht, wobei es sich um die weitest verbreitete Ausführungsform von Linsenrohlingen handelt.

Praktisch erscheint, wenn die Drehlagerung auf der Seite des Linsenhalters angeordnet ist, die von dem Aufnahmebereich der optischen Linse wegweist. Auf diese Weise besteht freier Zugang zum Be- und Entladen des Linsenhalters. In einer bevorzugten Ausführung liegt die Drehlagerung geodätisch unter dem Linsenhalter. Auf diese Weise lassen sich die optischen Linsen einfach von oben einlegen und es sind Zustände des Linsenhalters unkritisch, in denen keine Fixierung aktiv ist (bspw. Stromausfall, Arbeitsunterbrechung, Übergabezeitpunkte beim Be- und Entladen des Linsenhalters, etc.). Die Schutzfilmentfernungsvorrichtung weist vorzugsweise eine Be- und Entladevorrichtung auf, die dazu ausgestaltet ist, optische Linsen in den Aufnahmebereich des Linsenhalters einzubringen und hieraus zu entnehmen. Dabei weist die Be- und Entladevorrichtung vorzugsweise einen Saughalter auf, der dazu ausgestaltet ist, die optische Linse mit Unterdruck auf der zweiten Linsenoberfläche zu fixieren.

Die Drehlagerung weist bevorzugt einen Drehantrieb auf. Dies erlaubt einen aktiven Antrieb, sodass sich die Fluidstrahlen präzise gesteuert über dem Umfang der optischen Linse aufbringen lassen. Der Drehantrieb weist vorzugsweise einen Elektromotor auf. Eine denkbare Alternative zum Drehantrieb wäre beispielsweise eine Drehbewegung, die aus dem Impuls der Fluidstrahlen resultiert.

Weiterhin können die Düsenaustrittskanäle jeweils in Richtung der Mittelachse weisen. Damit treffen sie ohne Anstellung in Umfangsrichtung auf den Linsenumfang bzw. die Trennlinie zwischen Linsenoberfläche und Schutzfilm. Dieser Winkel erweist sich als besonders effektiv zum Ablösen des Schutzfilms.

Zusätzlich kann die Schutzfilmentfernungsvorrichtung ein Gebläse zum Trockenblasen der optischen Line aufweisen.

Des Weiteren kann die Schutzfilmentfernungsvorrichtung eine Abwischvorrichtung aufweisen, die insbesondere derart ausgestaltet ist, dass mit einem Wischwerkzeug die erste Linsenoberfläche der im Linsenhalter aufgenommenen optischen Linse abwischbar ist.

Eine besonderen Ausführungsform der Erfindung besteht darin, dass die Schutzfilmentfernungsvorrichtung eine zweite Entfernungsstation zum zeitgleich mit der zuerst beschriebenen Entfernungsstation Lösen eines Schutzfilms von einer Linsenoberfläche einer zweiten optischen Linse aufweist. Dadurch verdoppelt sich der mögliche Durchsatz an zu bearbeitenden Linsen. Dabei können sich die erste und zweite Entfernungsstation eine Be- und Entladevorrichtung, den Zulauf (insbesondere bis zu einem Verteiler), die Förderpumpe, den Sammelbehälter, die Schutzkabine, eine Steuereinheit und/oder die Kühlvorrichtung teilen.

Die zweite Entfernungsstation kann die optionalen Merkmale der erstgenannten Entfernungsstation optional ebenfalls aufweisen. So kann diese zweite Entfernungsstation einen weiteren erfindungsgemäßen Linsenhalter aufweisen, insbesondere zur Aufnahme der zweiten optischen Linse. Entsprechend den bereits beschriebenen Ausprägungen der zuerst beschriebenen (ersten) Entfernungsstation, kann diese Ausprägung auch bei der zweiten Entfernungsstation ausgebildet sein. Die Vorteile entsprechen denjenigen der ersten Entfernungsstation, wobei wie erwähnt außerdem zahlreiche Maschinenkomponenten geteilt werden können, wozu auch die Auswerteeinrichtung gehört. Im Besonderen kann die zweite Entfernungsstation eines oder mehrere der optionalen Merkmale der ersten Entfernungsstation aufweisen. Auch hier resultieren die jeweiligen Vorteile der ersten Entfernungsstation entsprechend. So ist es insbesondere auch umsetzbar, dass die zweite Entfernungsstation zumindest im Wesentlichen merkmalsgleich oder sogar baugleich zur ersten Entfernungsstation ausgebildet ist. Zum Ausnutzen individuell langer Bearbeitungszeiten zum Lösen des Schutzfilms bietet es sich an, einzelne Kammern und Verschlusselemente für die zwei Entfernungsstationen einzusetzen. Hierdurch ist das Be- und Entladen asynchron durchführbar und die schneller bearbeitete Linse muss nicht auf die langsamere warten.

Die Erfindung betrifft außerdem ein Verfahren zum Lösen eines Schutzfilms von einer optischen Linse umfassend die folgenden Schritte:
a) Aufnahme einer optischen Linse mit einer ersten Linsenoberfläche, einer der ersten Linsenoberfläche gegenüberliegenden zweiten Linsenoberfläche und einem Linsenumfang in einem Linsenhalter, wobei die optische Linse mit der ersten Linsenoberfläche in Richtung des Linsenhalters weist und auf der zweiten Linsenoberfläche ein Schutzfilm aufgebracht ist;
b) Erfassen einer Lichtverteilung in einem Bildbereich einer Kamera, die auf der Seite der ersten Linsenoberfläche angeordnet ist, und mit dem Bildbereich durch die erste Linsenoberfläche hindurch die zweite Linsenoberfläche erfasst;
c) Durchführen eines mechanischen, thermischen, chemischen, pneumatischen oder hydraulischen Arbeitsschritts zum Lösen des Schutzfilms von der zweiten Linsenoberfläche;
d) Auswerten von Veränderungen in der Lichtverteilung in dem Bildbereich der Kamera, während oder nach dem Durchführen des Arbeitsschritts zum Lösen des Schutzfilms;
e) Wiederholen bzw. Fortsetzen der Schritte c) und d) bis aufgrund der Veränderungen in der Lichtverteilung in dem Bildbereich auf ein erfolgreiches Entfernen des Schutzfilms geschlossen werden kann.

Verfahrensgemäß wird damit sichergestellt, dass der Schutzfilm sicher entfernt ist. Außerdem lässt sich der Ressourceneinsatz für den Arbeitsschritt zum Lösen des Schutzfilms auf das notwenige Maß reduzieren und der Durchsatz an bearbeitbaren optischen Linsen steigt.

Schritt e) kann bei Feststellung eines erfolgreichen Entfernens die Ausgabe eines Steuersignals zur Freigabe und Entnahme der optischen Linse aus dem Linsenhalter umfassen.

Optional kann Schritt e) auch ein Abbruchssignal umfassen, um die optische Linse aus dem Linsenhalter zu entnehmen und als nachzukontrollierende optische Linse zu kennzeichnen (vorzugsweise in den Linseninformationen einer Steuereinheit, nicht physisch auf der optischen Linse).

Weiter optional kann das Verfahren um eine Objekterkennung mittels einer Außenkamera ergänzt sein, wobei die Außenkamera die zweite Linsenoberfläche von der Außenseite aus erfasst und Objekte auf der zweiten Linsenfläche identifiziert, die auf einen Schutzfilm oder Schutzfilmreste hiervon hindeuten. Vorteilhaft hieran ist, dass keine Verdeckung der zweiten Linsenoberfläche durch den Linsenhalter vorliegt und das Bild scharf ist. Die Auswertung kann mittels Indikatoren für einen Schutzfilm oder Schutzfilmreste auf der zweiten Linsenoberfläche erfolgen. Dazu können Bildparameter in einer Auswerteeinrichtung hinterlegt sein, die zwischen einem Vorhandensein oder Nicht-Vorhandensein eines Schutzfilms auf der zweiten Linsenoberfläche im Bereich eines Bildausschnitts der Außenkamera differenzieren. Das können beispielsweise Farben des Schutzfilms und Lichtkanten von geknickten oder teilgelösten Schutzfilmen sein. Die Bildparameter können aus vorausgegangenen Linsenbearbeitungen entnommen oder abgeleitet sein. Vorzugsweise erfolgt die Objekterkennung zumindest nach dem Arbeitsschritt zum Lösen des Schutzfilms. Optional wird ein Bildvergleich vor und nach dem Arbeitsschritt zum Lösen des Schutzfilms durchgeführt.

Fernerhin kann das Durchführen des Arbeitsschritts zum Lösen des Schutzfilms nach Schritt c) mit wenigstens einer Fluiddüse erfolgen, die einen Fluidstrahl auf die Einheit aus der optischen Linse und dem Schutzfilm richtet. Dies ist eine effiziente und die optische Linse schonende Bearbeitung, wobei das Auswerten von Veränderungen in der Lichtverteilung trotz des resultierenden Sprühnebels von der Rückseite der optischen Linse aus erfolgen kann.

Bevorzugt ist eine parallel zur Linsenachse ausgerichtete Höhe oder der Durchmesser der Fluidstrahlen jeweils kleiner als der maximale Abstand, und bevorzugt als der minimale Abstand, zwischen der ersten und zweiten Linsenoberfläche. Solch ein feiner Fluidstrahl trägt zur Präzision, Effizienz und Ressourcenschonung bei. Vereinfacht gesagt ist die optische Linse dann dicker als der Fluidstrahl.

Vorzugsweise haben der oder die Fluidstrahlen einen kreisförmigen Querschnitt. Außerdem ist es zu bevorzugen, den oder die Fluidstrahlen zylindrisch und/oder laminar auszubilden, insbesondere durch entsprechende Konfiguration der Fluiddüsen. So lässt sich ein kompakter, energiereicher Strahl präzise auf die Trennzone zwischen Schutzfilm und optischer Linse richten.

Des Weiteren sollten die Fluidstrahlen mit Ausnahme der Drehbewegungen der Fluiddüsen eine konstante Ausrichtung sowie bezogen auf die Linsenachse eine konstante Neigung aufweisen. Steile Anstellwinkel des Fluidstrahls in der Trennzone zwischen optischer Linse und Schutzfilm sind ineffektiv. Weil die Linsenkrümmung vergleichsweise flach ist, ändert sich der Auftreffwinkel nur geringfügig während der Verschiebung der Trennlinie beim sukzessiven Lösen des Schutzfilms. Diese geringe Winkeländerung auszugleichen wäre zwar zusätzlich möglich, ist aber komplex in der technischen Umsetzung.

Weiter optional kann eine relative Drehbewegung der Fluiddüse oder der Fluiddüsen um den Linsenumfang herum durchgeführt werden, und ein Überlagern der relativen Drehbewegung durch eine relative Hubbewegung der Fluiddüse oder den Fluiddüsen erfolgen, die längs zu einer Linsenachse der Linse ausgerichtet ist. Die Rotationsbewegung und die Hubbewegung erlauben es, den Fluidstrahl präzise in die Trennzone zwischen Schutzfilm und zweiter Linsenoberfläche zu lenken und den Schutzfilm sukzessive zu lösen. Für den Einsatz von unterschiedlichen Schutzfilmen und Linsengrößen lassen sich die Drehbewegung und Hubbewegung individuell auswählen und optional auch mit der Auswerteeinrichtung optimieren, sodass auch kurzfristig zwischen unterschiedlichen Bewegungsprofilen umgestellt werden kann, so zum Beispiel mit elektronisch gespeicherten Bewegungsprofilen.

Verfahrensgemäß kann die Hubbewegung oszillierend erfolgen und der oder die Fluidstrahlen oszillierend über eine Trennlinie zwischen Schutzfilm und der zweiten Linsenoberfläche hinweggelenkt werden, wobei sich insbesondere die Trennlinie aufgrund des sukzessiven Lösens des Schutzfilms kontinuierlich hin zur Linsenachse verschiebt. Dadurch kommt es insbesondere zum Abheben des Schutzfilms und dessen sukzessive Trennung von der ersten Linsenoberfläche, bis der Schutzfilm schließlich von der ersten Linsenoberfläche entfernt ist. Dies ist vergleichbar mit einem Spachtel (aus Fluid), der mehrmals von der Linsenoberfläche (d.h. Linsenumfang oder Linsenoberfläche) in Richtung des Schutzfilms geschoben wird. Man könnte die Hubbewegung beispielsweise als sinuswellenartig modulieren. Aufgrund der sich verschiebenden Trennlinie kann dabei die Nullpunktlage der Hubbewegung der Trennlinie folgen.

Die Drehbewegung kann einen Drehrichtungswechsel aufweisen und die Fluiddüse oder die Fluiddüsen zwischen zwei Endlagen hin- und herschwenken.

Bei der Durchführung des Verfahren können sowohl der Linsenhalter wie er vor- und nachstehend mit seinen optionalen Ausgestaltungen beschrieben ist, als auch die Schutzfilmentfernungsvorrichtung wie sie vor- und nachstehend mit ihren optionalen Ausgestaltungen beschrieben ist, eingesetzt werden. Umgekehrt kann das Verfahren funktional von dem Linsenhalter oder der Schutzfilmentfernungsvorrichtung umgesetzt werden.

Schließlich betrifft die Erfindung die Verwendung eines Linsenhalters wie er vor- und nachstehend beschrieben ist beim Lösen eines Schutzfilms von einer optischen Linse, und insbesondere der Kamera zur Auswertung der Lichtverteilung im Aufnahmebereich zur Beurteilung des Arbeitsfortschritts beim Lösen des Schutzfilms.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Seitensicht einer Schutzfilmentfernungsvorrichtung, wobei das Maschinengehäuse durch einen Vertikalschnitt geöffnet dargestellt ist;
- Fig. 2: einen Vertikalschnitt durch einen Linsenhalter und eine optische Linse; und
- Fig. 3: eine perspektivische Ansicht einer Schutzfilmentfernungsvorrichtung mit Außenkamera mit Halter.

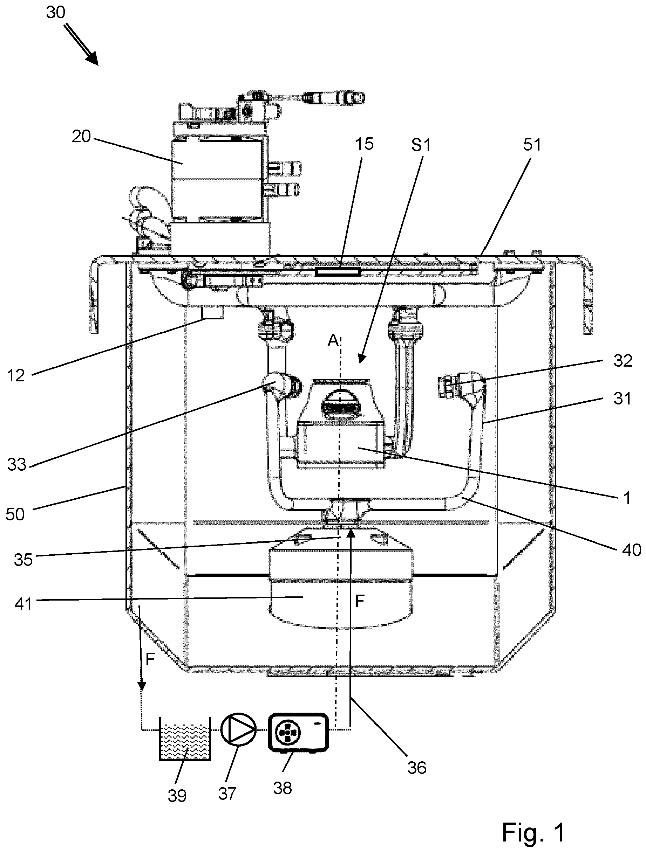

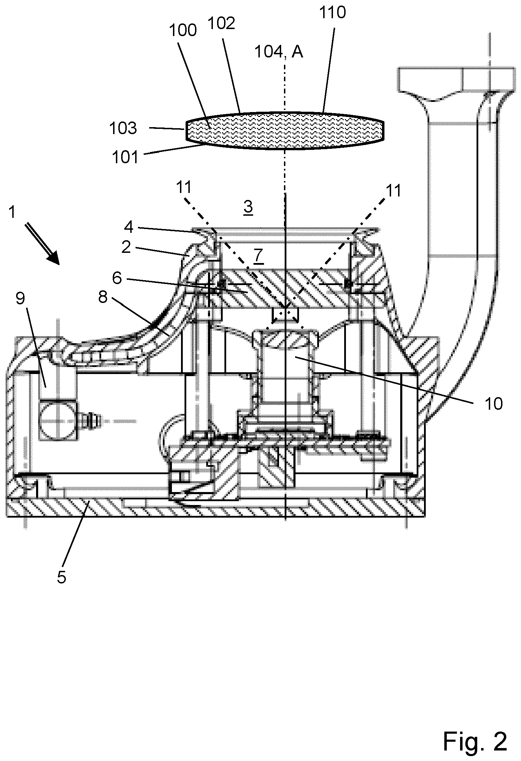

**Fig. 1** zeigt einen Schnitt durch eine Schutzfilmentfernungsvorrichtung 30 mit einer ersten Entfernungsstation S1 zum Lösen eines Schutzfilms von einer zweiten Linsenoberfläche einer optischen Linse oder eines un- oder teilbearbeiteten Linsenrohlings (im weiteren einfach optische Linse). Im Inneren eines Maschinengehäuses 50 der Schutzfilmentfernungsvorrichtung 30 sitzt ein Linsenhalter 1. Dieser soll zunächst näher anhand der Fig. 2 beschrieben werden.

**Fig. 2** zeigt einen Vertikalschnitt durch den Linsenhalter 1 der Fig. 1 und durch eine optische Linse 100. Die optische Linse 100 ist axial beabstandet vom Linsenhalter 1 gezeigt, so wie es bei einem Be- oder Entladen des Linsenhalters 1 der Fall sein könnte. Sie verfügt über eine erste Linsenoberfläche 101, die in Richtung des Linsenhalters 1 weist, eine der ersten Linsenoberfläche 101 gegenüberliegenden zweite Linsenoberfläche 102, die vom Linsenhalter 1 wegweist, einen Linsenumfang 103, der die erste und zweite Linsenoberfläche 101, 102 begrenzt, sowie eine imaginäre Linsenachse 104, die die erste und zweite Linsenoberfläche 101, 102 jeweils in ihrem Zentrum schneidet. In den meisten Fällen bildet diese Linsenachse 104 auch die Mittelachse für den Linsenumfang 103 aus. Gezeigt ist eine konvexe erste Linsenoberfläche 101. Insbesondere bei der Brillenglasherstellung ist die erste Linsenoberfläche 101 allerdings meistens konkav. Auf der zweiten Linsenoberfläche 102 ist ein Schutzfilm 110, bspw. eine Schutzfolie aufgebracht.

Der zur Aufnahme einer optischen Linse 100 ausgebildete Linsenhalter 1 verfügt über ein Trägerelement 2, das einen Aufnahmebereich 3 für die optische Linse 100 ausbildet. Am Trägerelement 2 ist eine Dichtung 4 befestigt, die der Fixierung der optischen Linse 100 in dem Aufnahmebereich 3 durch Unterdruck dient.

Der Linsenhalter 1 weist eine Kamera 10 hinter dem Aufnahmebereich 3 auf, wobei die Kamera 10 zurückversetzt im Zentrum des Dichtrings 4 angeordnet ist. Mit dem Bildbereich 11 der Kamera 10 wird eine Lichtverteilung im Aufnahmebereich 3 erfasst. Der Bildwinkel des Bildbereichs 11 ergibt sich durch die Kameralinse und reicht bis an die Innenseite des Dichtrings 4 heran. Aufgrund der Dicke der optischen Linse 100 ist so die zweite Linsenoberfläche 102 zumindest nahezu vollständig erfassbar.

Das Trägerelement 2 ist Teil eines Gehäuses 5, in dem die Kamera 10 vor Fluid geschützt angeordnet ist. Dabei sitzt zwischen der Kamera 10 und dem Aufnahmebereich 3 eine optisch durchlässige Scheibe 6, vorzugsweise eine transparente Scheibe 6, im Gehäuse 5. Wenn man nur definierte Lichtwellenlängen erfassen möchte, bspw. um Umgebungslichteinflüsse auszuschließen, ist auch der Einsatz einer Lichtfilterscheibe möglich.

Zwischen der Kamera 10 und dem Aufnahmebereich 3, bzw. zwischen der Scheibe 6 und dem Aufnahmebereich 3 ist ein Hohlraum 7 ausgebildet, in den am geodätisch tiefsten Punkt ein Unterdruckkanal 8 mündet. An den Unterdruckkanal 8 ist ein Unterdruckanschluss 9, zum Anschließen einer außerhalb des Gehäuses 5 sitzenden Unterdruckpumpe vorgesehen. Die Unterdruckpumpe könnte auch direkt im Gehäuse 5 sitzen und dann ausgangsseitig mit der Umgebung des Gehäuses 5 verbunden sein. Als weitere Alternative könnte ein ansteuerbares Rückschlagventil in dem Unterdruckkanal 8 eingesetzt und der Unterdruck durch Andrücken der optischen Linse 100 erzeugt werden.

Wie man in Fig. 1 sieht, ist dieser Linsenhalter 1 mit zwei vertikal ausgerichteten Armen unter der Oberseite im Maschinengehäuse 50 aufgehängt. Die Arme sind hohl ausgeführt und durch diese hindurch führen Daten- und Stromleitungen in das Innere des Gehäuses 5 des Linsenhalters 1. Der Linsenhalter 1 ist Teil einer Entfernungsstation S1 zum Lösen des Schutzfilms 110 von der zweiten Linsenoberfläche 102 der optischen Linse 100 und dazu ausgestaltet, die optische Linse 100 in dieser Entfernungsstation S1 zu halten.

Die Entfernungsstation S1 weist ein Einwirkmittel 31 auf, das dazu ausgestaltet ist mechanisch, thermisch, chemisch, pneumatisch oder hydraulisch auf den Schutzfilm 110 einzuwirken. Der Linsenhalter 1 hat eine imaginäre Mittelachse A, die mit der Linsenachse 104 zusammenfällt und das Einwirkmittel 31 verfügt über drei Fluiddüsen 32, 33 (von denen eine verdeckt angeordnet ist) mit jeweils einem Düsenaustrittskanal. Die Fluiddüsen 31, 32 sind um definierte Drehwinkel um die Mittelachse A versetzt zu den anderen der Fluiddüsen 31, 32 angeordnet. Bei drei Fluiddüsen 31, 32 bietet sich ein Drehwinkel von 120 Grad an. Die Fluiddüsen 32, 33 sind jeweils an einem Ausleger 40 angeordnet, der topf-, korb- oder krallenartig von unten den Linsenhalter 1 umgreift. Zwischen dem Linsenhalter 1 und den Fluiddüsen 32, 33 bzw. dem Ausleger 40 ist eine Drehlagerung 35 derart ausgebildet, dass mit den Fluiddüsen 32, 33 eine Drehbewegung um die Mittelachse A ausführbar ist, wobei der Düsenaustrittskanal der Fluiddüsen 32, 33 jeweils nach innen ausgerichtet ist. Zusätzlich ist zwischen dem Linsenhalter 1 und den Fluiddüsen 32, 33 eine Hubvorrichtung 41 derart ausgebildet, dass mit den Fluiddüsen 32, 33 eine Hubbewegung relativ zum Linsenhalter 1 ausführbar ist, die längs zur Mittelachse A ausgerichtet ist. Der Linsenhalter 1 selbst ist drehfest und axialfest im Maschinengehäuse 50 festgelegt und entsprechend dazu ausgestaltet, die optische Linse 100 drehfest und axialfest im Aufnahmebereich 3 zu halten.

Die Düsenaustrittskanäle sind jeweils derart ausgebildet, dass sie einen zumindest im Wesentlichen geraden und laminaren Fluidstrahl erzeugen. Hierzu werden die Düsenaustrittskanäle jeweils über einen Zulauf 36 mit Fluid F gespeist, wobei im Zulauf 36 eine Förderpumpe 37, eine Kühlvorrichtung 38 zum Kühlen des Fluids F und ein Sammelbehälter 39 angeordnet sind. Das Maschinengehäuse 50 läuft in den Sammelbehälter 39 ab.

Darüber hinaus verfügt die Entfernungsstation S1 über eine Auswerteeinrichtung 20, die mit der Kamera 10 verknüpft und dazu ausgestaltet ist, die Lichtverteilung im Aufnahmebereich 3 auszuwerten. In der Auswerteeinrichtung 20 sind Lichtparameter hinterlegt, die zwischen einem Vorhandensein oder Nicht-Vorhandensein eines Schutzfilms 110 auf der zweiten Linsenoberfläche 102 im Bereich eines Bildausschnitts des Bildbereichs 11 differenzieren.

Zur Schaffung einer konstanten Auswertungsumgebung weist die Schutzfilmentfernungsvorrichtung 30 ein Leuchtmittel 15 auf, das den Aufnahmebereich 3 des Linsenhalters 1 beleuchtet. Hierzu leuchtet das Leuchtmittel 15 in Richtung der Kamera 10. Das Leuchtmittel 15 ist kinematisch mit einem Verschlusselement 51 des Maschinengehäuses 50 gekoppelt, insbesondere hieran befestigt, sodass es in einer Geschlossenstellung des Verschlusselements 51 eine Arbeitsposition einnimmt, in der es den Aufnahmebereich 3 des Linsenhalters 1 beleuchtet, und in einer Offenstellung des Verschlusselements 51 aus der Arbeitsposition heraus bewegt ist. Das Leuchtmittel 15 behindert hierdurch nicht das Be- und Entladen des Linsenhalters 1 und es sind auch keine eigenen Antriebe für das Leuchtmittel 15 erforderlich.

Zusätzlich ist eine Außenkamera 12 außerhalb des Linsenhalters 1 angeordnet und erfasst mit ihrem Bildbereich die zweite Linsenoberfläche 102 aus der von der Kamera 10 gegenüberliegenden Richtung. Hier sind unterschiedlich Kamerapositionen möglich, bspw. eine eher seitliche, um vor allem sich aufstellende Folienreste auf der zweiten Linsenoberfläche 102 zu erkennen, eine zentral von oben, bspw. im Zentrum des Leuchtmittels 15, oder - wie dargestellt - schräg von oben.

Die Auswerteeinrichtung 20 ist auch mit dieser Außenkamera 12 verknüpft und dazu ausgestaltet, eine Objekterkennung im Aufnahmebereich 3 durchzuführen, insbesondere durch Auswerten von Indikatoren für einen Schutzfilm 110 oder Schutzfilmreste auf der zweiten Linsenoberfläche 102. In der Auswerteeinrichtung 20 sind hierzu Bildparameter hinterlegt, die zwischen einem Vorhandensein oder Nicht-Vorhandensein eines Schutzfilms 110 auf der zweiten Linsenoberfläche 102 im Bereich eines Bildausschnitts der Außenkamera 12 differenzieren.

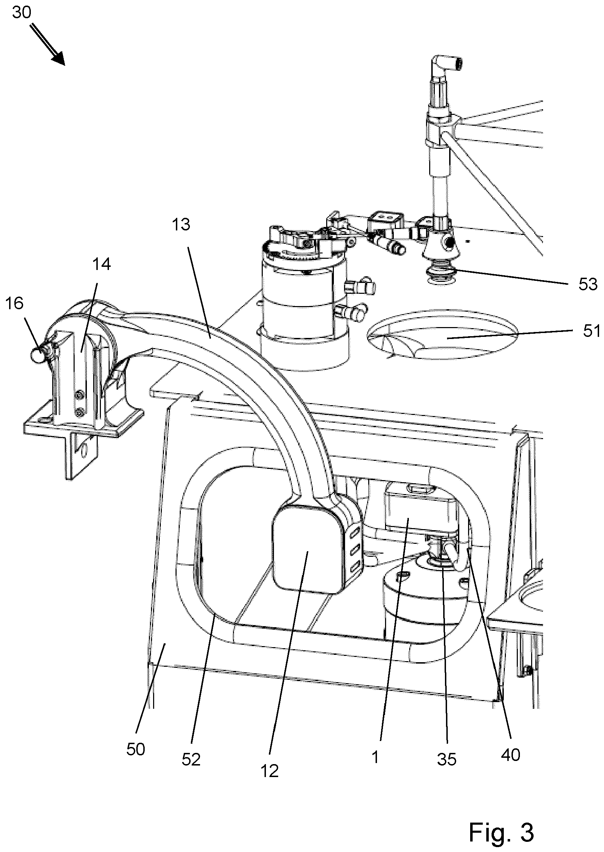

**Fig.** 3 zeigt eine perspektivische Ansicht einer Schutzfilmentfernungsvorrichtung 30 mit Außenkamera 12 und Haltearm 13. Der Haltearm 13 hält die Außenkamera 12 vor einem Sichtfenster 52 eines Maschinengehäuses 50, wie es auch zu Fig. 1 beschrieben ist. Durch das Sichtfenster 52 erkennt man den Linsenhalter 1 und den Ausleger 40 der Fluiddüsen, sowie deren Drehlagerung 35. Diesbezüglich wird auf die Beschreibung der Figur 1 verwiesen. Hinsichtlich der Positionierung der Außenkamera 12 weichen die Fig. 1 und 3 voneinander ab. Der Haltearm 13 ist um eine Schwenkachse 14 nach oben schwenkbar, um bei Bedarf den Blick für einen Arbeiter durch das Sichtfenster 52 freizugeben. Der Haltearm 13 lässt sich dabei in mehreren Schwenkwinkeln mit einem Arretierknopf 16 festlegen. Oberhalb des Maschinengehäuses 50 erkennt man zudem eine Be- und Entladevorrichtung mit einem Saughalter 53 zum Be- und Entladen des Linsenhalters 1 mit optischen Linsen, nämlich durch eine Öffnung im Maschinengehäuse 50, die mit einem Verschlusselement 51 (hier optional transparent ausgeführt) verschlossen ist. Zum Be- und Entladen des Linsenhalters 1 wird das Verschlusselement 51 automatisch von der Geschlossenstellung in eine Offenstellung bewegt.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1 | Linsenhalter | 36 | Zulauf |
| 2 | Trägerelement | 37 | Förderpumpe |
| 3 | Aufnahmebereich | 38 | Kühlvorrichtung |
| 4 | Dichtung | 39 | Sammelbehälter |
| 5 | Gehäuse | 40 | Ausleger |
| 6 | Scheibe | 41 | Hubvorrichtung |
| 7 | Hohlraum | | |
| 8 | Unterdruckkanal | 50 | Maschinengehäuse |
| 9 | Unterdruckanschluss | 51 | Verschlusselement |
| | | 52 | Sichtfenster |
| 10 | Kamera | 53 | Saughalter (Be- und Entladevorrichtung) |
| 11 | Bildbereich | | |
| 12 | Außenkamera | | |
| 13 | Haltearm | 100 | optische Linse |
| 14 | Schwenkachse | 101 | erste Linsenoberfläche |
| 15 | Leuchtmittel | 102 | zweite Linsenoberfläche |
| 16 | Arretierknopf | 103 | Linsenumfang |
| | | 104 | Linsenachse |
| 20 | Auswerteeinrichtung | 110 | Schutzfilm |
| 30 | Schutzfilmentfernungsvorrichtung | A | Mittelachse (Linsenhalter) |
| 31 | Einwirkmittel | F | Fluid |
| 32 | Fluiddüse | S1 | Entfernungsstation |
| 33 | Fluiddüse | | |
| 35 | Drehlagerung | | |

## Patentansprüche

1. **Linsenhalter** (1) zur Aufnahme einer optischen Linse (100), mit einem Trägerelement (2), das einen Aufnahmebereich (3) für die optische Linse (100) ausbildet, und mit einer Dichtstruktur oder Dichtung (4) am Trägerelement (2) zur Fixierung der optischen Linse (100) in dem Aufnahmebereich (3) durch Unterdruck, **dadurch gekennzeichnet, dass** eine Kamera (10) hinter dem Aufnahmebereich (3) angeordnet ist, mit deren Bildbereich (11) eine Lichtverteilung im Aufnahmebereich (3) erfasst wird.

2. Linsenhalter (1) nach Anspruch 1, **dadurch gekennzeichnet, dass** die Dichtung (4) ein Dichtring ist und die Kamera (10) zurückversetzt im Zentrum des Dichtrings angeordnet ist.

3. Linsenhalter (1) nach einem der Ansprüche 1 oder 2, **dadurch gekennzeichnet, dass** die Kamera (10) fluiddicht in einem Gehäuse (5) des Linsenhalters (1) angeordnet ist.

4. Linsenhalter (1) nach Anspruch 3, **dadurch gekennzeichnet, dass** zwischen der Kamera (10) und dem Aufnahmebereich (3) eine optisch durchlässige Scheibe (6) im Gehäuse (5) sitzt.

5. Linsenhalter (1) nach einem der vorhergehenden Ansprüche, **dadurch gekennzeichnet, dass** zwischen der Kamera (10) und dem Aufnahmebereich (3) ein Hohlraum (7) ausgebildet ist, in den ein Unterdruckkanal (8) mündet.

6. **Schutzfilmentfernungsvorrichtung** (30) mit einem Linsenhalter (1) nach einem der vorhergehenden Ansprüche,
- wobei der Linsenhalter (1) dazu ausgebildet ist, eine optische Linse (100) mit einer ersten Linsenoberfläche (101), einer der ersten Linsenoberfläche (101) gegenüberliegenden zweiten Linsenoberfläche (102) und einem Linsenumfang (103), wobei die optische Linse (100) mit der ersten Linsenoberfläche (101) in Richtung des Linsenhalters (1) weist und auf der zweiten Linsenoberfläche (102) ein Schutzfilm (110) aufgebracht ist, in einer Entfernungsstation (S1) zum Lösen des Schutzfilms (110) von der zweiten Linsenoberfläche (102) der optischen Linse (100) zu halten,
- wobei die Entfernungsstation (S1) ein Einwirkmittel (31) aufweist, das dazu ausgestaltet ist mechanisch, thermisch, chemisch, pneumatisch oder hydraulisch auf den Schutzfilm (110) einzuwirken, und
- wobei die Entfernungsstation (S1) eine Auswerteeinrichtung (20) aufweist, die mit der Kamera (10) verknüpft und dazu ausgestaltet ist, die Lichtverteilung im Aufnahmebereich (3) auszuwerten.

7. Schutzfilmentfernungsvorrichtung (30) nach Anspruch 6, **dadurch gekennzeichnet, dass** diese ein Leuchtmittel (15) aufweist, das den Aufnahmebereich (3) des Linsenhalters (1) beleuchtet.

8. Schutzfilmentfernungsvorrichtung (30) nach Anspruch 7, **dadurch gekennzeichnet, dass** das Leuchtmittel (15) kinematisch mit einem Verschlusselement (51) eines Maschinengehäuses (50) gekoppelt ist, und insbesondere in einer Geschlossenstellung des Verschlusselements (51) eine Arbeitsposition einnimmt, in der es den Aufnahmebereich (3) des Linsenhalters (1) beleuchtet, und in einer Offenstellung des Verschlusselements (51) aus der Arbeitsposition heraus bewegt ist.

9. Schutzfilmentfernungsvorrichtung (30) gemäß einem der Ansprüche 6 bis 8, **dadurch gekennzeichnet, dass** eine Außenkamera (12) außerhalb des Linsenhalters (1) angeordnet ist und mit ihrem Bildbereich die zweite Linsenoberfläche (102) aus der von der Kamera (10) gegenüberliegenden Richtung erfasst.

10. Schutzfilmentfernungsvorrichtung (30) nach einem der Ansprüche 6 bis 9, **dadurch gekennzeichnet, dass** der Linsenhalter (1) eine imaginäre Mittelachse (A) aufweist, und die Einwirkmittel (31) wenigstens eine Fluiddüse (32, 33) mit einem Düsenaustrittskanal, und wenigstens eine Drehlagerung (35) zwischen dem Linsenhalter (1) und der oder den Fluiddüsen (32, 33) aufweist, wobei die Drehlagerung (35) derart ausgebildet ist, dass mit der oder den Fluiddüsen (32, 33) eine Relativbewegung um die Mittelachse (A) ausführbar ist, wobei der Düsenaustrittskanal der Fluiddüsen (32, 33) jeweils nach innen ausgerichtet ist.

11. Schutzfilmentfernungsvorrichtung (30) nach Anspruch 10, **dadurch gekennzeichnet, dass** zwischen dem Linsenhalter (1) und der oder den Fluiddüsen (32, 33) eine Hubvorrichtung (41) derart ausgebildet ist, dass mit der oder den Fluiddüsen (32, 33) eine Relativbewegung zum Linsenhalter (1) ausführbar ist, die längs zur Mittelachse (A) ausgerichtet ist.

12. Schutzfilmentfernungsvorrichtung (30) gemäß einem der Ansprüche 10 oder 11, **dadurch gekennzeichnet, dass** der Linsenhalter (1) drehfest angeordnet ist und die Fluiddüse oder die Fluiddüsen (32, 33) jeweils drehbar um die Drehlagerung (35) angeordnet sind.

13. **Verfahren** zum Lösen eines Schutzfilms (110) von einer optischen Linse (100) umfassend die folgenden Schritte:
a) Aufnahme einer optischen Linse (100) mit einer ersten Linsenoberfläche (101), einer der ersten Linsenoberfläche (101) gegenüberliegenden zweiten Linsenoberfläche (102) und einem Linsenumfang (103) in einem Linsenhalter (1), wobei die optische Linse (100) mit der ersten Linsenoberfläche (101) in Richtung des Linsenhalters (1) weist und auf der zweiten Linsenoberfläche (102) ein Schutzfilm (110) aufgebracht ist;
b) Erfassen einer Lichtverteilung in einem Bildbereich (11) einer Kamera (10), die auf der Seite der ersten Linsenoberfläche (101) angeordnet ist, und mit dem Bildbereich (11) durch die erste Linsenoberfläche (101) hindurch die zweite Linsenoberfläche (102) erfasst;
c) Durchführen eines mechanischen, thermischen, chemischen, pneumatischen oder hydraulischen Arbeitsschritts zum Lösen des Schutzfilms (110) von der zweiten Linsenoberfläche (102);
d) Auswerten von Veränderungen in der Lichtverteilung in dem Bildbereich (11) der Kamera (10), während oder nach dem Durchführen des Arbeitsschritts zum Lösen des Schutzfilms (110);
e) Wiederholen bzw. Fortsetzen der Schritte c) und d) bis aufgrund der Veränderungen in der Lichtverteilung in dem Bildbereich (11) auf ein erfolgreiches Entfernen des Schutzfilms (110) geschlossen werden kann.

14. Verfahren nach Anspruch 13, wobei eine Objekterkennung mittels einer Außenkamera (12) durchgeführt wird, wobei die Außenkamera (12) die zweite Linsenoberfläche (102) von der Außenseite aus erfasst und Objekte auf der zweiten Linsenoberfläche (102) identifiziert, die auf einen Schutzfilm (110) oder Schutzfilmreste hiervon hindeuten.

15. **Verwendung** eines Linsenhalters (1) nach einem der Ansprüche 1 bis 5 beim Lösen eines Schutzfilms (110) von einer optischen Linse (100), und insbesondere der Kamera (10) zur Auswertung der Lichtverteilung im Aufnahmebereich (3) zur Beurteilung des Arbeitsfortschritts beim Lösen des Schutzfilms (110).
